Europäisches Patentamt

(19)    European Patent Office     (11) Publication number: **0 180 524**

Office européen des brevets              **B1**

(12)            **EUROPEAN PATENT SPECIFICATION**

(45) Date of publication of patent specification: **17.05.89**    (51) Int. Cl.⁴: **B 29 C 49/36,** B 29 C 49/06, B 29 C 51/22

(21) Application number: **85402105.2**

(22) Date of filing: **31.10.85**

(54) Stretching blow molding apparatus for cup-like containers.

(30) Priority: **31.10.84 JP 229723/84**

(43) Date of publication of application:
**07.05.86 Bulletin 86/19**

(45) Publication of the grant of the patent:
**17.05.89 Bulletin 89/20**

(84) Designated Contracting States:
**DE FR GB IT**

(56) References cited:
**DE-A-2 006 258
FR-A-2 098 332
FR-A-2 343 586
GB-A-2 094 220
US-A-3 324 509
US-A-3 947 204
US-A-3 990 826
US-A-4 076 484**

(73) Proprietor: **NISSEI ASB MACHINE CO., LTD.
6100-1, Ohazaminamijo Sakakimachi
Hanishina-gun Nagano-ken 389-06 (JP)**

(72) Inventor: **Daiichi, Aoki NISSEI ASB MACHINE
CO. LTD.
6100-1, Ohazaminamijo Sakakimachi
Hanishina-gun Nagano-ken (JP)**

(74) Representative: **Schrimpf, Robert et al
Cabinet Regimbeau 26, Avenue Kléber
F-75116 Paris (FR)**

Courier Press, Leamington Spa, England.

**Description**

This invention relates to an apparatus which can continuously perform the operation of injection molding of a flat preform made of synthetic resin under temperature control, and stretching blow molding of a cup-like container having a wide mouth.

An injection stretching blow molding machine as described in the pre-characterizing part of claim 1 is disclosed in U.S. Patent No. 4,105,391, which comprises an operation stage for effecting injection molding of a preform, an operation stage for controlling the preform to have a temperature suitable for stretching blow molding, an operation stage for stretching the preform into a blow mold and air-blowing the preform into a container such as a bottle, and an operation stage for removing the container, wherein a mold which forms a part of an injection mold generally called a neck mold or a lip mold is also made to serve as a holder, said mold is moved together with an intermittently rotating rotary disk, and the preform and container are transferred from one operation stage to the other.

In the aforementioned molding machine, the preform forming a neck portion of a container is transferred with an upper end thereof held on a neck mold and subjected to stretching blow molding. However, in case of a cup-like container having no neck portion as in a container such as a bottle, it has been extremely difficult to perform injection stretching blow molding making use of a well known molding machine unless a circumferential portion of the preform is held by some means.

Means for holding a flatly injection molded preform is designed so that an undercut groove is formed in an inner peripheral portion of a hold mold corresponding to the neck mold, and a preform peripheral edge serving as an open edge of a cup-like container is formed by said groove.

However, there is a limitation of forming a groove in a hold mold. In addition, an undercut cannot be formed deeply to a sufficient extent even in the event the hold mold is divided to remove an open edge from the groove, in consideration of release of a container. Therefore there sometimes encountered an occasion such that a peripheral edge of a preform is partly slipped out of the goove, under the influence of pressure produced when the preform is stretched by a stretching rod or when air is blown, to fail molding of the preform into a cup-like container.

Furthermore, where the preform is held by the undercut, protruded lines in the number equal to the undercut are annularly formed on inside or outside or on both sides of the open edge. This leads to a problem that a sealing material is difficult to be bonded to the open edge because of the presence of the protruded lines.

Moreover, since the preform is held by making use of undercut, releasing cannot be done unless a holder mold is divided. A problem also involved is that despite the fact that the simplest and inexpensive cups as containers are molded, apparatus equivalent to that used to mold containers such as bottles has to be used.

A problem encountered in the aforementioned prior art lies in exactly molding a container such as a cup, which is different in configuration from a bottle using technical means similar to that used for injection stretching blow molding of a bottle or the like.

It is therefore an object of the present invention to provide a molding apparatus having a new construction in which a peripheral edge of a preform need not be formed by a groove having an undercut, special holding means is not required to transfer a preform and a cup-like container, and a preform is not disengaged from a holder mold under the pressure even at the time of stretching blow molding.

It is a further object of the present invention to provide an economical molding apparatus which can simplify a mold and devices attached to the mold, and can produce a number of cup-like containers within a limit area.

According to the present invention the above-described objects are achieved by the features of the characterizing part of the independent claim. A peripheral edge of a flat preform forming a peripheral edge portion of a container is formed by an upper surface of a hold mold on a rotating transfer disk, the peripheral edge is sandwiched between a shoulder formed on a lower end of a blow core and the hold mold, at the time of stretching blow molding, to form a cup-like container, and the container is removed upwardly from the hold mold for release.

The drawings show a stretching blow molding apparatus for a cup-like container by respective operation stages.

FIG 1A is a longitudinal sectional side view of an injection molding operation stage.

FIG. 1B is a partial sectional view of an injection mold.

FIG. 2 is a longitudinal sectional side view of an operation stage for controlling a temperature of a preform.

FIGS. 3 to 5 are respectively longitudinal sectional side views of a stretching blow operation stage showing the steps of stretching blow molding in order.

FIGS. 6 and 7 are respectively longitudinal sectional side views of a removing operation stage showing the removing state of a cup-like container in order.

The stretching blow molding apparatus, overall view of which is not shown, has a transfer disk 1 intermittently rotated by 90°, at which four operation stages are provided, i.e., an injection molding operation stage, a preform temperature-control operation stage, a stretching blow molding operation stage, and a removing operation stage.

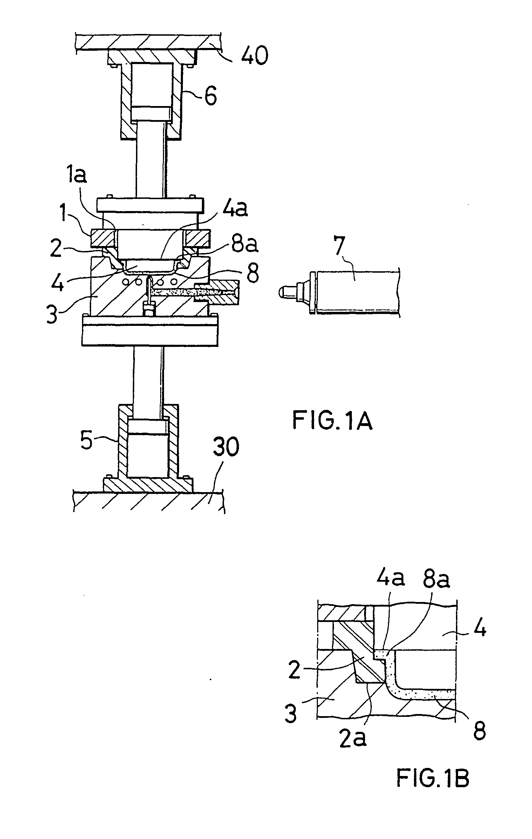

The injection molding operation stage has an injection mold comprising a bottom mold 3 closed relative to a single-member hold mold 2 mounted on the undersurface of the transfer disk 1, and a core mold 4 inserted into and closed relative to the hold mold 2, through an opening 1a having a larger diameter than a molded article provided on the transfer disk 1, from the top of the transfer disk 1, as shown in FIG. 1.

The bottom mold 3 is supported movably up and down by a clamping cylinder 5 secured to a base plate 30, and an injection device 7 is disposed on the side thereof. The core mold 4 is supported movably up and down by a clamping cylinder 6 mounted on an upper support member 40 and encased in the hold mold 2 from the opening 1a of the transfer disk 1 rotatably mounted by a well known means.

A cavity for molding a flat preform 8 having a planar shape in the form of a circular plate is formed between the hold mold 2, the bottom mold 3 and the core mold 4. The resins injected into the cavity is molded at the bottom of the preform 8 between the bottom mold 3 and the core mold 4, at peripheral walls between the hold mold 2 and the core mold 4, and at a peripheral edge 8a between a shoulder 2a internally of the hold mold 2 and a shoulder 4a of the core mold 4 provided opposedly of the shoulder 2a.

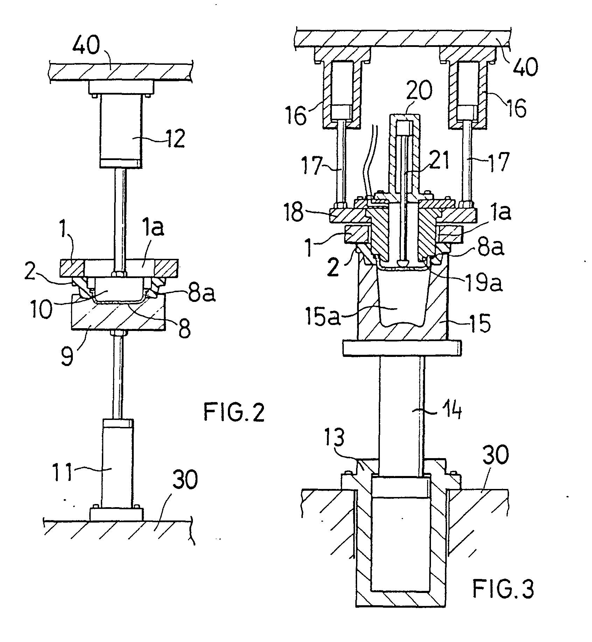

The preform temperature-control stage comprises a temperature control mold 9 fitted to the lower portion of the hold mold 2, and a temperature control core 10 fitted into the preform 8 from the opening 1a of the transfer disk 1, as shown in FIG. 2. The temperature control mold 9 is supported movably up and down by an air cylinder 11 installed on a base board 30. The temperature control core 10 is connected to an air cylinder 12 provided on an upper support member 40.

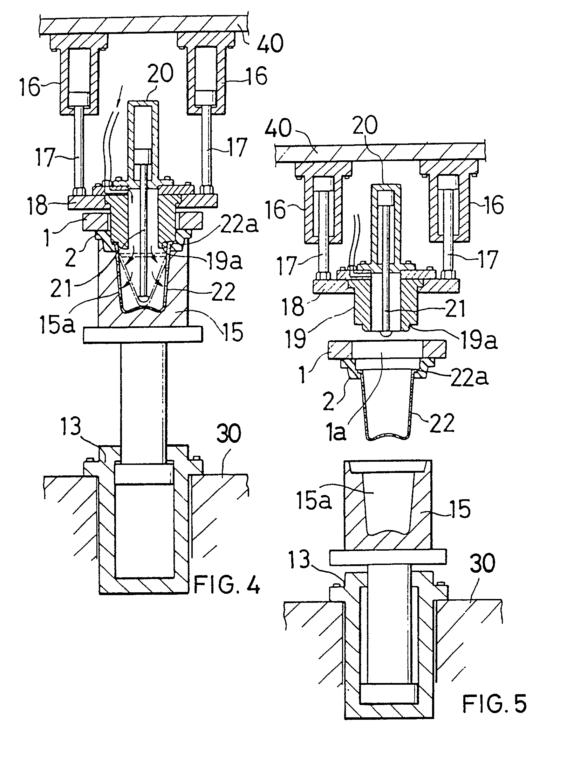

The stretching blow molding operation stage comprises a blow mold 15 connected to a plunger 14 of a lower clamping cylinder 13 installed on the base board 30 below the hold mold 2, and a blow core 19, as shown in FIGS. 3 to 5. This blow core 19 is connected to a central portion of a plate 18 which is connected to piston rods 17 of a pair of upper clamping cylinders 16 mounted on the support member 40 and is arranged above the hold mold 2.

The blow mold 15 has a cavity 15a, the upper portion of which is open, and the blow core 19 has a shoulder 19a at the periphery of the lower end thereof, said shoulder 19a being fitted to an open inner edge of the preform 8. The shoulder 19a presses a peripheral edge 8a of the preform 8 under the influence of a clamping force and holds the peripheral edge 8a together with the hold mold 2. In the central portion of the blow core 19 is provided a stretching rod 21 which is moved up and down by means of an air cylinder 20 so that compressed air may be blown through the periphery of the stretching rod 21.

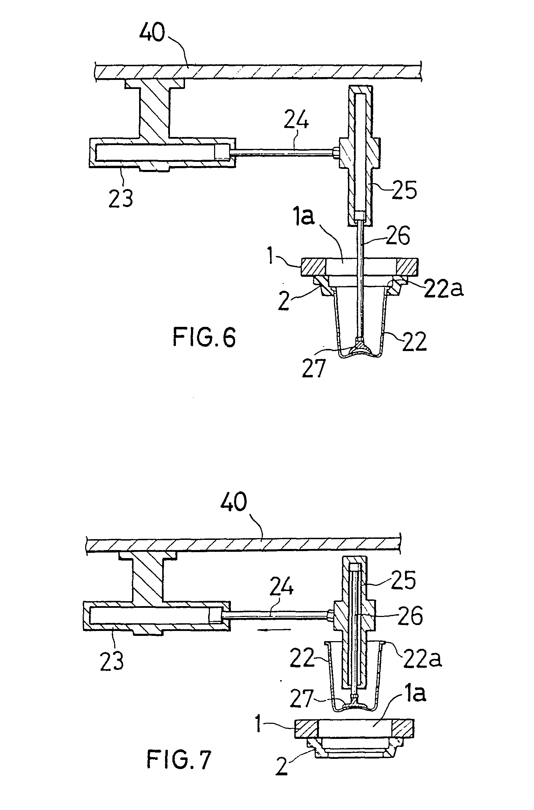

The removing operation stage is provided with a device inserted into a cup 22 from the opening 1a of the transfer disk 1 to remove the cup 22 upwardly of the transfer disk, as shown in FIGS. 6 and 7.

This device is simple in construction which comprises an air cylinder 23 horizontally secured to the support member 40, and an air cylinder 25 vertically connected to a piston rod 24 of an air cylinder 23, wherein an attraction plate 27 is mounted on the extreme end of a piston rod 26 projected to the lower end of the air cylinder 25.

The operation of the apparatus will be described hereinafter.

FIG. 1:
The hold mold 2, the injection mold 3 arranged below the hold mold 2 and the core mold 4 located above the hold mold 2 and fitted into both the hold mold 2 and injection mold 3 are combined by the upper and lower clamping cylinders 5 and 6 to form the mold, after which the molten resin is injected into the cavity from the injection device 7 to mold the flat preform 8 having the peripheral edge 8a formed between the upper surface of the hold mold 2 and the lower surface of the core mold 4. Mold-opening after molding has been performed is carried out by returning the injection mold 3 downwardly and the core mold 4 upwardly. The preform 8 remains embraced by the hold mold 2.

FIG. 2:
After opening the mold, the transfer disk 1 is moved by the well-known means to transfer the hold mold 2 and the preform 8 to the temperature control operation stage. When the transfer disk 1 stops, the temperature control mold 9 and the temperature control core 10 move up and down respectively to sandwich the preform 8 with the peripheral edge 8a engaged by the shoulder of the hold mold 2 therebetween for temperature control.

FIGS. 3, 4 and 5:
The preform 8 having been temperature-controlled is released from the temperature control, after which it is transferred together with the hold mold 2 by the movement of the transfer disk 1 to the stretching blow molding operation stage for clamping.

The blow mold 15 and the blow core 19 with the hold mold 2 sandwiched therebetween are clamped, and the peripheral edge 8a of the preform 8 is fixed by the shoulder 19a. Thereafter, the stretching rod 21 is extended downward to stretch the preform 8 down to the bottom of the cavity 15a and the compressed air is blown in to fully expand the cavity and mold the cup 22. In this case, the peripheral edge 8a of the preform 8 remains as the open edge 22a of the cup 22.

After the cup 22 has been molded, mold-opening is carried out while returning or after returning the stretching rod 21 to its original position.

FIGS. 6 and 7:
The transfer disk 1 is moved to transfer the cup 22 along with the hold mold 2 to the removing position.

When the transfer disk 1 stops at a predetermined position, the piston rod 26 is inserted into the cup from the top, and the attraction plate 27 is pressed against the bottom surface of the cup for attraction, after which the piston rod 26 is contracted to pull the cup 22 upwardly. Since the cup 22 is merely in a state in which the open edge 22a is placed on the upper surface of the hold mold 2 and is freed from others, the cup is removed from the hold mold 2 by being pulled as described above.

Next, when the piston rod 24 is contracted by the horizontal air cylinder 23, the cup 22 moves in a lateral direction along with the vertical air cylinder 25 and is carried externally of the transfer disk 1.

It is to be noted that the temperature control operation stage in the above-described embodiment is sometimes omitted and that removing can be done at the stretching blow molding operation stage.

As will be apparent from the above-described embodiment, according to the present invention, the peripheral edge of the flat preform forming the open edge of the cup is formed by the upper surface of the hold mold and the core mold and the peripheral edge is held by the shoulder formed at the lower end of the blow core to perform stretching blow molding. Therefore, even if separate holding means is not provided, the preform is never disengaged under pressure produced at the time of stretching and blowing.

Furthermore, since the cup after the blow core has been opened merely remains on the hold mold side with the open edge thereof placed on the shoulder of the hold mold, the cup can be removed upwardly without dividing and opening the hold mold. Accordingly, the construction of the hold mold can be simplified and mounting thereof on the transfer disk is simply done.

**Claims**

1. An injection stretching blow molding apparatus for a container (22), the apparatus comprising an injection molding operation stage including a hold mold (2) provided on the underside of an intermittently rotating transfer disk (1), an injection mold for a flat preform (8) comprising a bottom mold (3) closed relative to said hold mold and a core mold (4) inserted into the hold mold from an opening (1a) formed in said transfer disk, a mold opening and closing device (5, 6) for moving upward and downward said bottom mold and said core mold, and an injection device (7) oriented toward the side of said injection mold; and a stretching blow molding operation stage including a blow mold (15) closed relative to said hold mold, a blow core (19) inserted into the hold mold from an opening formed in said hold mold, a stretching rod (21) inserted into said blow core with an air blow gap provided around an axis thereof, an opening and closing device (13, 14, 16, 17) for moving upward and downward said blow mold and said blow core, and a stretching rod operating device (20); characterized in that the apparatus is for molding a cup-like container, in that the opening (1a) of said transfer disk is formed to be larger in diameter than a cup-like container (22), in that said hold mold (2) consists of a single member, in that said hold mold (2) has an internal shoulder (2a) and said core mold (4) also has a shoulder (4a), the preform (8) being located between said shoulders during molding, thereby forming a peripheral edge (8a) on the preform, the hold mold shoulder (2a) also serving to hold the preform and the cup-like container when transferred, and in that said blow core (19) has at its lower periphery a shoulder (19a) that fits into the inner open edge of the preform to hold the peripheral edge of the preform by the shoulder of the hold mold.

2. The injection stretching blow molding apparatus for a cup-like container (22) according to claim 1 wherein said blow core (19) is connected to a plate (18) which is connected to piston rods (17) of a pair of upper clamping cylinders (16) mounted on a support member (40) above the transfer disk (1), and said blow core is provided in a central portion thereof with a stretching rod (21) which is moved up and down by means of an air cylinder (20) mounted on said plate. ·

3. The injection stretching blow molding apparatus for a cup-like container (22) according to claim 1 wherein above the transfer disk (1) is provided a device (25—27) for upwardly removing the cup-like container (22), the open edge (22a) of which is engaged with and held at the shoulder (29) of said hold mold, through the opening (1a) of said transfer disk (1).

4. The injection stretching blow molding apparatus for a cup-like container according to claims 1 and 3 wherein said removing device comprises an air cylinder (25) in which attraction means (27) is provided on the end of the piston rod (26).

**Patentansprüche**

1. Vorrichtung zum Spritz-Streckblasformen eines Behälters (22) mit einer Spritzformstation, welche eine Halteform (2) an der Unterseite einer intermitierend rotierenden Übergabescheibe (1), eine Spritzform für einen flachen Vorformling (8) mit einer bezüglich der Halteform geschlossenen Bodenform (3) und einer über eine Öffnung (1a) in der Übergabescheibe in die Halteform eingeschobenen Kernform (4), eine Formöffnungs und Schließvorrichtung (5, 6) zum Aufwärts und Abwärtsbewegen der Bodenform und der Kernform und eine zur Seite der Spritzform hin gerichtete Einspritzvorrichtung (7) aufweist; und mit einer Streckblasformstation, welche eine bezüglich der Halteform geschlossene Blasform (15), einen über eine Öffnung in die Halteform eingesetzten Blaskern, eine in den Blaskern eingesetzten Streckstange (21), die um ihre Achse einen Luftblasspalt aufweist, eine Öffnungs- und Schließvorrichtung (13, 14, 16, 17) zum Aufwärts- und Abwärtsbewegen der Blasform und des Blaskerns und eine Betätigungsvorrichtung (20) zum Betätigen der Streckstange aufweist, dadurch gekennzeichnet, daß die Vorrichtung zum Formen eines becherförmigen Behälters bestimmt ist, daß die Öffnung (1a) der Übergabescheibe einen größeren Druchmesser als der becherförmige Behälter (22) hat, daß die Halteform (2) aus einem einzigen Bauteil besteht, daß die Halteform (2), eine Innenschulter (2a) und die Kernform (4) ebenfalls eine Schulter (4a) aufweisen, wobei der Vorformling (8) beim Formen zwischen diesen Schultern liegt, so daß ein Umfangsrand (8a) an den Vorformling angeformt wird, und wobei die Schulter (2a) an der Halteform auch zum Halten des Vorformlings und des becherförmigen Behälters bei seiner Übergabe dient, und daß der Blaskern an seinem unteren Umfang eine Schulter (19a) aufweist, welche in den inneren offenen Rand des Vorformlings paßt, um den Umfangsrand des Vorformlings mittels der Schulter der Halteform zu halten.

2. Vorrichtung zum Spritz-Streckblasformen eines becherförmigen Behälters (22) nach Anspruch 1, dadurch gekennzeichnet, daß der Blaskern (19) mit einer Platte (18) verbunden ist, welche mit den Kolbenstangen (17) eines Paares obere Spannzylinder (16) verbunden ist, die an einem Stützteil (40) oberhalb der Übergabescheibe (1) angeordnet sind, und daß der Blaskern in seinem mittleren Abschnitt mit einer Streckstange (21) versehen ist, welche mittels eines an der Platte angeorneten Luftzylinders (20) auf und ab bewegt wird.

3. Vorrichtung zum Spritz-Streckblasformen eines becherförmigen Behälters (22) nach Anspruch 1, dadurch gekennzeichnet, daß die Übergabescheibe (1) mit einer Einrichtung (25—27) zum Entfernen des becherförmigen Behälters (22) nach oben versehen ist, dessen oberer Rand (22a) an der Schulter (2a) der Halteform durch die Öffnung (1a) der Übergabescheibe (1) hindurch anliegt und gehalten wird.

4. Vorrichtung zum Spritz-Streckblasformen eines becherförmigen Behälters nach Anspruch 1 und 3, dadurch gekennzeichnet, daß die Einrichtung zum Entfernen einen Luftzylinder (25) aufweist, an dessen einem Ende seiner Kolbenstange (26) eine Ansaugvorrichtung angeordnet ist.

## Revendications

1. Dispositif de moulage par injection-étirage-soufflage pour un gobelet (22), le dispositif comprenant un poste travaillant de moulage par injection qui comprend un moule de retenue (2) prévu sur la face inférieure du disque de transfert (1) qui tourne par intermittence, un moule d'injection servant à mouler une ébauche plate (8), comprenant un moule de fond (3) fermé sur ledit moule de retenue et un moule noyau (4) inséré dans le moule de retenue à partir d'une ouverture (1a) formée dans ledit disque de transfert, un dispositif d'ouverture et de fermeture du moule (5, 6) servant à faire monter et descendre ledit moule de fond et ledit moule noyau, et un dispositif d'injection (7) orienté vers le côté dudit moule d'injection; et un poste travaillant de moulage par étirage-soufflage comprenant un moule de soufflage (15) fermé sur ledit moule de retenue, un nopyau de soufflage (19) inséré dans le moule de retenue à partir d'une ouverture formée dans ledit moule de retenue, une tige d'étirage (21) insérée dans ledit noyau de soufflage en ménageant une fente de soufflage d'air autour de son axe, un dispositif d'ouverture et de fermeture (13, 14, 16, 17) servant à faire monter et descendre ledit moule de soufflage et ledit noyau de soufflage, et un dispositif (20) d'actionnement de la tige d'étirage; caractérisé en ce que le dispositif est destiné à mouler un récipient en forme de gobelet, en ce que l'ouverture (1a) du disque de transfert est formée de manière à avoir un plus grand diamètre qu'un récipient en forme de gobelet, en ce que ledit moule de retenue (2) est composé d'un élément unique, en ce que ledit moule de retenue (2) possède un épaulement intérieur (2a) et ledit moule noyau (4) possède également un épaulement (4a), l'ébauche (8) étant placée entre lesdits épaulements pendant le moulage, ce qui moule un bord périphérique (8a) sur l'ébauche, l'épaulement du moule de retenue (2a) servant également à retenir l'ébauche et le récipient en forme de gobelet lorsqu'ils sont transférés, et en ce que ledit moule de soufflage (19) possède à sa périphérie inférieure un épaulement (19a) qui s'ajuste dans le bord ouvert intérieur de l'ébauche pour retenir le bord périphérique de l'ébauche au moyen de l'épaulement du moule de retenue.

2. Dispositif de moulage par injection-étirage-soufflage pour un récipient en forme de gobelet (22) selon la revendication 1, dans lequel ledit moule noyau (19) est relié à une plaque (18) qui est reliée à des tiges de pistons (17) d'une paire de cylindres de serrage supérieurs (16) montés sur un élément support (40) au-dessus du disque de transfert (1), et ledit noyau de soufflage est muni, dans sa partie centrale, d'une tige d'étirage (21) qui est mobile en mouvement ascendant et descendant sous l'action d'un vérin pneumatique (20) monté sur ladite plaque.

3. Dispositif de moulage par injection-étirage-soufflage pour un récipient en forme de gobelet (22) selon la revendication 1, dans lequel il est prévu au-dessous du disque de transfert (1) un dispositif (25 à 27) servant à enlever le récipient en forme de gobelet (22), dont le bord ouvert (22a) est en prise avec l'épaulement (2a) dudit moule de retenue et retenu au niveau de cet épaulement, à travers l'ouverture (1a) dudit disque de transfert (1).

4. Dispositif de moulage par injection-étirage-soufflage pour un récipient en forme de gobelet selon les revendications 1 et 3, dans lequel ledit dispositif d'enlèvement comprend un vérin pneumatique (25) dans lequel des moyens d'attraction (27) sont prévus sur l'extrémité de la tige de piston (26).

40

6

1a

1

2

4

3

4a

8a

8

7

FIG.1A

5

30

4a  8a

4

2

3

2a

8

FIG.1B

1

40

12

1    1a

2

10    8a

9    8

FIG.2

11    30

16    40

16

17    21    17

18    1a

1    8a

2    19a

15a    15

14

13    30

FIG.3

FIG. 4

FIG. 5

FIG.6

FIG.7

4